# FASCICULE DE BREVET EUROPEEN

(11) **EP 2 506 945 B1**
(45) Date de publication et mention de la délivrance du brevet: **01.06.2016**
(21) Numéro de dépôt: 10793055.4
(22) Date de dépôt: 26.11.2010
(51) Int. Cl.: B01D 15/18, B01D 15/22, B01D 11/04, B04B 5/06, G01N 30/38

(54) **DISPOSITIF ET PROCEDE DE MISE EN CONTACT DE PHASES FLUIDES IMMISCIBLES PAR LA FORCE CENTRIFUGE**
VORRICHTUNG UND VERFAHREN ZUR POSITIONIERUNG VON UNMISCHBAREN FLÜSSIGPHASEN IN KONTAKT MITEINANDER DURCH ZENTRIFUGALKRAFT
DEVICE AND METHOD FOR PLACING IMMISCIBLE FLUID PHASES IN CONTACT WITH EACH OTHER BY MEANS OF CENTRIFUGAL FORCE

(30) Priorité: 01.12.2009 FR 0905784
(43) Date de publication de la demande: 10.10.2012
(73) Titulaire: Centre National de la Recherche Scientifique, 75016 Paris (FR); UNIVERSITE DE NANTES, 44000 Nantes (FR)
(72) Inventeur: FOUCAULT, Alain Paul Olivier, F-44600 Saint-Nazaire (FR); LEGRAND, Jack, F-44600 Saint-Nazaire (FR); MARCHAL, Luc, F-44600 Saint-Nazaire (FR); AGAISE, Charles Elie Pierre, F-44300 Nantes (FR)
(74) Mandataire: Gevers & Orès
(86) Numéro de dépôt international: PCT/IB2010/055456
(87) Numéro de publication internationale: WO 2011/067704

(56) Documents cités:
- FR-A1- 2 920 674
- US-A- 4 551 251
- BERTHOD A ET AL: "Using the liquid nature of the stationary phase in countercurrent chromatography", JOURNAL OF CHROMATOGRAPHY, ELSEVIER SCIENCE PUBLISHERS B.V, NL LNKD- DOI:10.1016/J.CHROMA.2006.03.031, vol. 1116, no. 1-2, 26 mai 2006 (2006-05-26), pages 143-148, XP024967384, ISSN: 0021-9673 [extrait le 2006-05-26]
- SUTHERLAND ET AL: "Recent progress on the industrial scale-up of counter-current chromatography", JOURNAL OF CHROMATOGRAPHY, ELSEVIER SCIENCE PUBLISHERS B.V, NL LNKD- DOI:10.1016/J.CHROMA.2007.01.143, vol. 1151, no. 1-2, 5 mai 2007 (2007-05-05), pages 6-13, XP022063764, ISSN: 0021-9673
- MURAYAMA W ET AL: "A new centrifugal counter-current chromatograph and its application", JOURNAL OF CHROMATOGRAPHY, ELSEVIER SCIENCE PUBLISHERS B.V, NL LNKD- DOI:10.1016/S0021-9673(00)82022-1, vol. 239, 30 avril 1982 (1982-04-30), pages 643-649, XP002336797, ISSN: 0021-9673

## Description

La présente invention concerne un dispositif et un procédé de mise en contact de phases fluides immiscibles au moyen de la force centrifuge, en particulier pour réaliser l'extraction de composés de l'une de ces phases par une autre phase. L'invention s'applique notamment, mais pas exclusivement, à l'extraction liquide-liquide, gaz-liquide ou solide-liquide-liquide, à des applications chromatographiques, à des réactions chimiques en milieu biphasique ou encore à la production de nano-émulsions.

Les dispositifs connus d'extraction centrifuge liquide-liquide peuvent comporter des agencements circonférentiels de cellules de mélangeage et éventuellement de cellules de décantation entraînées en rotation, comme illustré par exemple dans le document DE-A-31 30 967.

Les dispositifs connus de chromatographie de partage centrifuge (« CPC » en abrégé pour « Centrifugal Partition Chromatography »), i.e. permettant une séparation des composés d'un mélange entre une phase mobile et une phase stationnaire pour chacune desquelles les composés ont une affinité différente, comportent un empilement d'anneaux plats qui sont entraînés en rotation autour de leur axe de symétrie et qui comportent chacun dans un plan perpendiculaire à cet axe une multitude de cellules reliées entre elles par des conduits ou canaux d'entrée/ sortie par exemple gravés sur ces anneaux. La phase stationnaire est maintenue immobile à l'intérieur des cellules par la force centrifuge à laquelle elle est soumise du fait de la rotation des anneaux, pendant que la phase mobile percole cette phase stationnaire via des moyens de mise en circulation des phases, tels que des pompes. Un écoulement de la phase mobile à travers chaque cellule radialement vers l'intérieur (i.e. de la périphérie vers le centre) représente pour l'empilement d'anneaux un écoulement ascendant, alors qu'à l'inverse un écoulement radialement vers l'extérieur (i.e. du centre vers la périphérie) représente un écoulement descendant, le sens de l'écoulement étant déterminé par le rapport des densités de la phase mobile et de la phase stationnaire. On pourra par exemple se référer aux documents FR-A-2 791 578 et FR-A-2 923 398 pour la description de tels dispositifs.

Ces dispositifs connus de type à cellules de mise en contact des phases qui sont agencées sur la circonférence de l'unité tournante en étant reliées entre elles ont tous en commun d'impliquer, pour un sens de circulation donné sur cette circonférence (i.e. dans le sens horaire ou anti-horaire), un seul et même sens de traversée des cellules qui est radialement vers l'extérieur de chaque cellule (i.e. dans un sens descendant où la phase lourde discontinue percole la phase légère continue) ou bien radialement vers l'intérieur de chaque cellule (i.e. dans un sens ascendant où la phase légère discontinue percole la phase lourde continue).

Un but de la présente invention est de proposer un nouveau dispositif de mise en contact de phases fluides immiscibles au moyen de la force centrifuge, en particulier pour réaliser l'extraction de composés de l'une de ces phases par une autre phase, qui permette notamment d'optimiser le brassage de ces phases par rapport aux dispositifs actuels d'extraction centrifuge précités, ce dispositif comportant au moins une unité de mise en contact qui est apte à être entraînée en rotation autour d'un axe et qui comprend une pluralité de cellules destinées à être parcourues successivement par ces phases dans un même sens de circulation donné, chaque cellule étant pourvue de deux canaux d'entrée/ sortie qui relient de manière fluidique les cellules deux à deux entre elles et qui débouchent dans chaque cellule respectivement par deux orifices d'entrée/ sortie respectivement proximal et distal par rapport audit axe.

A cet effet, un dispositif selon l'invention est tel que pour au moins deux cellules adjacentes de ladite au moins une unité, leurs deux orifices proximaux ou bien leurs deux orifices distaux sont reliés directement entre eux par l'un de ces canaux, de telle sorte que ces phases circulent à travers l'une de ces cellules adjacentes vers ledit axe et à travers l'autre cellule en s'éloignant dudit axe.

Ce dispositif de l'invention est ainsi de type centrifuge à co-courant du fait du sens de circulation identique des phases d'une cellule à une autre, lesquelles phases sont au moins au nombre de deux.

On notera que ce dispositif, via ces deux sens de traversée (centrifuge et centripète) des cellules par les phases qui sont prédéterminés par cet agencement spécifique de leurs orifices d'entrée/ sortie et qui se traduisent par au moins une inversion du caractère continu et discontinu de ces phases lors de leur mise en contact dans les cellules, permet d'améliorer de manière significative l'efficacité du mélangeage des phases et donc avantageusement celle du transfert de matière recherché.

Selon une autre caractéristique de l'invention, ces canaux peuvent se subdiviser en au moins un canal proximal formé entre ledit axe et lesdites deux cellules adjacentes qu'il relie l'une à l'autre par leurs orifices proximaux respectifs et/ou en au moins un canal distal formé au-delà desdites deux cellules adjacentes par rapport audit axe qu'il relie l'une à l'autre par leurs orifices distaux respectifs.

Avantageusement, ladite au moins une unité peut comporter un anneau qui est apte à être entraîné en rotation autour de son axe de symétrie formant ledit axe et sur la circonférence duquel est formée ladite pluralité de cellules. Cette pluralité de cellules peut présenter à de multiples reprises sur la circonférence dudit ou de chaque anneau, d'une part, lesdites deux cellules adjacentes à orifices proximaux radialement internes reliés entre eux et, d'autre part, lesdites deux cellules adjacentes à orifices distaux radialement externes reliés entre eux, de telle sorte que ces phases circulent à travers les cellules radialement vers l'intérieur et vers l'extérieur d'une manière séquentielle prédéterminée, de préférence alternée sur cette circonférence.

On notera que l'alternance, sur la circonférence de ladite au moins une unité, de cellules à orifices proximaux reliés entre eux et à orifices distaux reliés entre eux (i.e. de cellules « CF » à traversée centrifuge et de cellules « CP » à traversée centripète aptes à être traversées par les phases radialement vers l'extérieur et vers l'intérieur, respectivement, sous la séquence ... CP-CF-CP-CF-CP-CF-CP ...), constitue un mode préférentiel de réalisation de l'invention du fait qu'elle force rapidement à chaque traversée de cellule l'inversion précitée des phases continue/ discontinue, améliorant encore l'intensité du brassage des phases obtenu.

En variante, on peut également prévoir, du fait d'un autre agencement choisi pour ces orifices et donc pour les canaux d'entrée/ sortie des cellules, que ces inversions de phases continue/ discontinue soient prédéterminées par un agencement suivant un motif non alterné se répétant ou non sur la circonférence de ladite au moins une unité, comme par exemple une séquence de cellules ... CP-CP-CF-CP-CP-CF-CP-CP ..., ... CP-CF-CF-CP-CF-CF-CP ... ou toute autre séquence impliquant un nombre différent de cellules CP entre deux cellules CF et/ou un nombre différent de deux cellules CF entre deux cellules CP.

En variante du ou de chaque anneau précité, on notera que ladite au moins une unité pourrait comporter un support des cellules non annulaire ( i.e. ni circulaire, ni cylindrique), comme par exemple un secteur de disque ou de cylindre ou encore une cassette présentant une géométrie autre.

Encore plus avantageusement, le ou chaque anneau peut comprendre plusieurs desdits canaux proximaux et plusieurs desdits canaux distaux qui sont respectivement radialement internes et externes par rapport aux cellules qu'ils relient entre elles et qui s'étendent tous deux sensiblement perpendiculairement à la direction radiale de cet anneau passant par ledit axe.

De préférence, chacune des cellules a lesdits deux orifices d'entrée/ sortie qui sont respectivement radialement interne et radialement externe vis-à-vis de cette cellule et qui sont sensiblement situés sur une droite radiale dudit ou de chaque anneau passant par ledit axe et par exemple par le barycentre de cette cellule vue en section radiale. En variante, on notera que les orifices d'entrée/ sortie de chaque cellule pourraient être décalés par rapport à son barycentre.

Quant à la géométrie des cellules formées dans ladite au moins une unité, elle peut être quelconque tant dans la direction radiale de sa longueur, dans la direction tangentielle (perpendiculaire à cette direction radiale) de sa largeur que dans la direction axiale de son épaisseur. Chaque cellule peut par exemple présenter, vue en section plane perpendiculaire audit axe de rotation, une forme polygonale, arrondie, oblongue ou autre, et cette forme peut optionnellement varier d'une cellule à traversée centrifuge CF à une cellule à traversée centripète CP.

Selon un mode de réalisation de l'invention, chacune des cellules peut être formée de plusieurs compartiments qui sont juxtaposés dans la direction radiale en étant reliés deux à deux entre eux par un pont fluidique radial. Ces compartiments d'une même cellule, qui peuvent être identiques ou différents, présentent par exemple chacun une forme oblongue dans la direction circonférentielle, le ou chaque pont radial étant sensiblement aligné avec lesdits deux orifices d'entrée/ sortie de chaque cellule.

Selon une autre caractéristique de l'invention, ledit dispositif peut comporter une multitude desdits anneaux de forme plate qui sont empilés autour dudit axe et qui sont destinés à former autant d'étages de transfert de matière, via un champ gravitationnel auquel les cellules sont soumises et qui fait correspondre des mouvements descendant et ascendant des phases respectivement à leur circulation radialement vers l'extérieur et vers l'intérieur à travers les cellules.

Selon une autre caractéristique de l'invention, ledit dispositif peut être pourvu de moyens de collecte desdites phases qui sont formés :
- en sortie du dispositif sous la forme d'un décanteur séparé, ou bien
- par un disque tournant autour dudit axe qui est intégré au dispositif en sortie de ladite ou desdites unité(s), via un canal de décantation formé dans ce disque de manière sensiblement circulaire selon une largeur constante ou variable ou bien en spirale.

Un procédé de mise en contact de phases fluides immiscibles au moyen de la force centrifuge selon l'invention, en particulier pour réaliser l'extraction de composés de l'une de ces phases par une autre phase, ce procédé comprenant un entraînement en rotation autour d'un axe d'une pluralité de cellules de mise en contact qui sont parcourues successivement par ces phases pour l'obtention dans chaque cellule d'une phase continue dans laquelle est dispersée une autre phase discontinue, est tel qu'il comprend une circulation dans un même sens donné des phases de cellule en cellule de manière que ces phases se rapprochent puis s'éloignent dudit axe lorsqu'elles traversent ces cellules, pour l'obtention d'une inversion de la phase continue et de la phase discontinue à chaque changement de leur direction de traversée de la ou chaque cellule concernée.

Selon une autre caractéristique de l'invention, l'on disperse par ce procédé l'une des phases, ou phase lourde, dans une autre phase, ou phase légère, à la ou chaque inversion de phases se traduisant par leur traversée d'une cellule « CF » dans le sens centrifuge d'un éloignement dudit axe et, à l'inverse, l'on disperse la phase légère dans la phase lourde à la ou chaque inversion de phases se traduisant par leur traversée d'une cellule « CP » dans le sens centripète d'un rapprochement dudit axe. On notera qu'une ou plusieurs autres phases intermédiaires sont optionnellement utilisables dans ce procédé, en plus de ces phases légère et lourde.

Selon une autre caractéristique préférentielle de l'invention, l'on réalise de manière séquentielle prédéterminée et de préférence alternée, de multiples inversions de ces phases continue et discontinue à chaque changement de leur direction de traversée des cellules.

Avantageusement, l'on peut former les cellules dans au moins une unité de mise en contact que l'on entraîne en rotation autour de son axe de symétrie formant ledit axe et sur la circonférence de laquelle est formée ladite pluralité de cellules, lesquelles génèrent ces inversions multiples de phases continue et discontinue par l'agencement de canaux d'entrée/ sortie reliant ces cellules deux à deux entre elles.

Selon un exemple de réalisation de l'invention se rapportant avantageusement au cas où le débit de la phase lourde est supérieur à celui de la phase légère, les cellules présentent au moins deux largeurs différentes dans la direction circonférentielle, incluant des largeurs de cellule minimale et maximale pour les cellules « CP » et « CF » traversées par ces phases radialement vers l'intérieur et vers l'extérieur, respectivement.

Selon une autre caractéristique préférentielle de l'invention, l'on met en contact ces phases via un champ gravitationnel auquel les cellules sont soumises et qui fait correspondre des mouvements descendant et ascendant des phases respectivement à leur traversée des cellules radialement vers l'extérieur et vers l'intérieur.

Selon un autre aspect de l'invention, l'on réalise par cette mise en contact une opération pouvant être choisie dans le groupe constitué par les extractions liquide-liquide, les extractions gaz-liquide, les extractions triphasiques solide-liquide-liquide, les chromatographies, les réactions chimiques en milieu biphasique et la production de nano-émulsions, et l'on réalise optionnellement en outre une opération de décantation pour séparer l'une de l'autre les phases mises en contact dans lesdites cellules.

Concernant les dispositifs d'extraction triphasique solide-liquide-liquide, la phase solide peut être présente sous la forme d'une suspension dans l'une ou dans les deux phases liquides.

Concernant les dispositifs de chromatographie liquide-liquide (« CPC »), on notera qu'il est possible de jouer sur le dimensionnement des cellules à traversée centripète « CP » et centrifuge « CF » et sur les débits des deux fluides pour que leurs temps de séjour respectifs soient très différents l'un de l'autre. Des solutés peuvent alors être séparés entre le temps le plus court et le temps le plus long, et les injections répétées autant de fois que nécessaire.

Concernant les dispositifs de type réacteur chimique, on peut envisager par exemple la présence dans la phase légère d'un catalyseur insoluble dans la phase lourde, et la présence dans la phase lourde entrant dans le dispositif de deux molécules M1 et M2 qui au contact de ce catalyseur (i.e. à l'interface entre les deux phases) réagissent pour donner une molécule M3, elle-même dans la phase lourde. Le brassage intense des deux phases à l'intérieur du dispositif favorise la cinétique de la réaction chimique, et la phase légère contenant le catalyseur est recyclée à la sortie de ce dispositif.

Concernant la production de nano-émulsions, on peut grâce au dispositif et au procédé de l'invention obtenir des micelles, liposomes et autres nano-objets de ce type par l'inversion de phases contrôlée et répétée de nombreuses fois sans avoir recours comme dans l'état antérieur de la technique à un changement de température, mais uniquement en maîtrisant l'hydrodynamique des fluides via les débits de circulation et la traversée des cellules dans les deux sens centrifuge et centripète.

On notera d'une manière générale que le dispositif et le procédé de l'invention qui réalisent de manière contrôlée ces inversions de phases continue/ discontinue permettent de contrôler précisément les écoulements biphasiques dans les cellules, par le jeu de paramètres comme la vitesse de rotation de ladite au moins une unité et le débit global, et de provoquer ainsi un brassage intense des phases. Il résulte de cette intensification de l'opération unitaire mise en oeuvre par l'invention que le volume du contacteur formé par ce dispositif peut être notablement réduit, ce qui permet d'abaisser le coût de cette opération unitaire.

Le contrôle des débits des phases permet également de diminuer la consommation de solvants organiques tout en augmentant le rendement de l'unité. Le dispositif selon l'invention peut en outre permettre l'utilisation de solvants jusque-là inutilisables avec les extracteurs conventionnels, notamment les solvants dits « verts ».

Ce contrôle optimisé selon l'invention des systèmes aqueux biphasiques peut être par exemple utilisé dans le domaine de l'extraction de matières biologiques, telles que des protéines, des virus, etc.

En hydrométallurgie, l'extraction des métaux par les complexants habituels et leur réextraction peut être améliorée grâce à l'augmentation de la cinétique des étapes qui est due au brassage optimisé procuré par l'inversion multiple des phases selon l'invention.

L'intensification des opérations unitaires obtenue par le dispositif et le procédé de l'invention trouve des applications importantes dans l'industrie nucléaire, en chimie fine, dans les industries pharmaceutique et cosmétique et dans les industries agrolimentaires.

Les caractéristiques précitées de la présente invention, ainsi que d'autres, seront mieux comprises à la lecture de la description suivante de plusieurs exemples de réalisation de l'invention, donnés à titre illustratif et non limitatif, la description étant réalisée en relation avec les dessins joints, parmi lesquels :
la figure 1 est une vue schématique en coupe axiale dans un plan vertical d'un dispositif centrifuge selon l'invention de type à anneaux empilés selon un mode de réalisation préférentiel de l'invention,
la figure 2 est une vue schématique partielle de dessus d'un tel anneau non conforme à l'invention qui est destiné à la chromatographie de partage centrifuge et dont les cellules sont reliées selon l'art antérieur,
la figure 3 est une vue schématique partielle de dessus d'un anneau selon l'invention utilisable dans le dispositif de la figure 1, dont les cellules à traversée centrifuge et centripète sont agencées d'une manière alternée selon un exemple préférentiel de réalisation de l'invention,
la figure 4 est une vue schématique de dessus de la totalité d'un anneau selon l'invention dont les cellules à traversée centrifuge et centripète sont alternées mais correspondent à une variante de la figure 3,
la figure 5 est une photographie montrant en vue de dessus la traversée de trois cellules d'un anneau selon la figure 4 par deux phases liquides respectivement constituées de d'acétate d'éthyle et d'eau,
la figure 6 est une photographie similaire montrant en vue de dessus la traversée de trois cellules d'un anneau selon la figure 4 par deux phases liquides respectivement constituées de butanol et d'eau,
la figure 7 est une photographie montrant en vue de dessus la traversée de trois cellules d'un anneau selon la figure 4 par deux phases liquides respectivement constituées d'un polyéthylène glycol et d'un phosphate de potassium dans de l'eau, et
la figure 8 est une vue schématique de dessus d'un décanteur intégré au dispositif de la figure 1, selon un exemple de réalisation de l'invention.

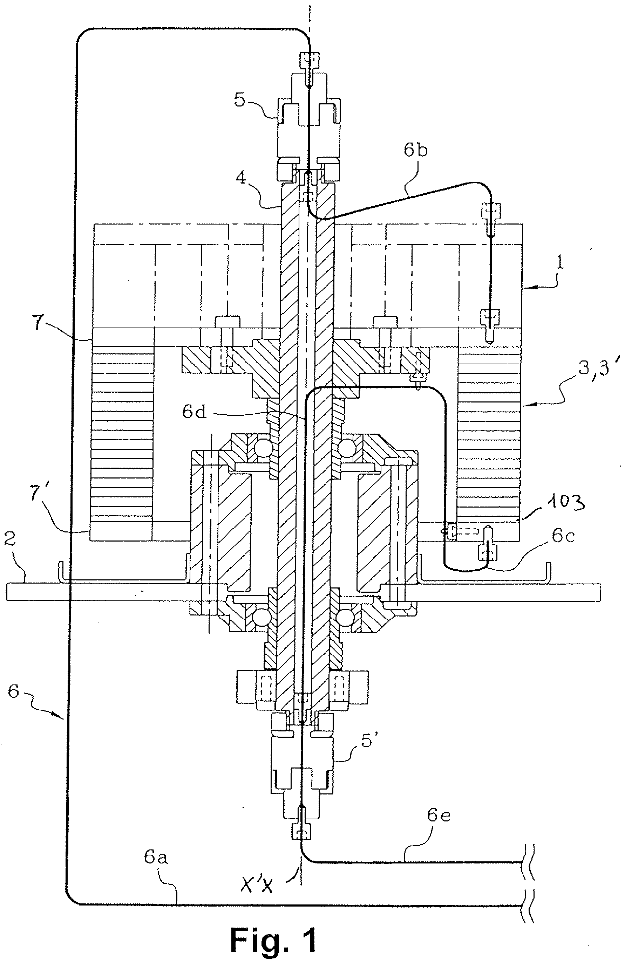

Comme illustré à la figure 1, un dispositif de mise en contact de phases selon l'invention comporte un rotor 1 monté sur une table 2 et apte à être entraîné en rotation autour d'un axe X'X disposé verticalement dans l'exemple de la figure 1, par l'intermédiaire de moyens d'entraînement connus et non représentés. Le rotor 1 est constitué de plusieurs anneaux plats 3 empilés, de même diamètre et solidaires d'une colonne 4 de structure connue formée d'un tube creux disposé entre deux joints tournants haut 5 et bas 5'. L'axe de rotation X'X correspond à l'axe des anneaux 3 empilés. La colonne 4 est alimentée en phases fluides à travers les joints 5 et 5' via un circuit de tuyaux 6 relié à des moyens d'alimentation et de récupération connus et non illustrés. Les anneaux 3 sont placés entre deux flasques 7 et 7' circulaires et de même diamètre extérieur que celui de chaque anneau 3.

Chacun des deux joints tournants 5 et 5' peut constituer soit l'entrée, soit la sortie du dispositif, et le trajet des phases dans le circuit 6 est matérialisé par un trait gras à la figure 1. Plus précisément, dans le cas où l'entrée du dispositif correspond au joint tournant 5, une première branche 6a du circuit 6 relie les moyens d'alimentation (tels qu'une pompe) à ce joint tournant 5 qui communique avec une deuxième branche 6b amenant les phases sous pression jusqu'à l'entrée du rotor 1 puis, en partie basse de ce dernier, au niveau de la branche 6c. La branche 6d, située à l'intérieur de la colonne 4, amène ensuite les phases jusqu'au joint tournant inférieur 5' puis au niveau de la branche 6e et vers les moyens de récupération.

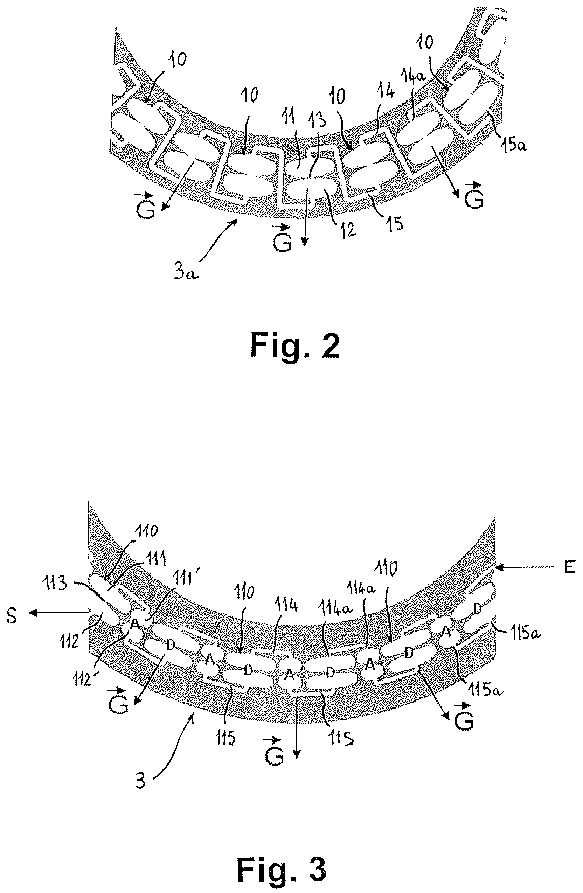

Pour l'ensemble des figures 2 à 7, on qualifie de « radiale » toute direction parallèle à un rayon d'un anneau 3a, 3, 3' et de « tangentielle » toute direction perpendiculaire à un rayon de celui-ci.

L'anneau 3a non conforme à l'invention qui est illustré à la figure 2 (dont les flèches G symbolisent le champ d'accélération centrifuge) présente à proximité de sa périphérie extérieure un agencement circonférentiel de cellules 10 qui, dans cet exemple, comportent chacune deux compartiments identiques 11 et 12 qui sont oblongs dans la direction tangentielle de l'anneau 3a et qui sont juxtaposés dans sa direction radiale en étant reliés entre eux par un étroit pont fluidique 13 radial. Chaque cellule 10 est pourvue de deux canaux d'entrée/ sortie 14 et 15 qui la relient fluidiquement aux deux cellules 10 adjacentes (i.e. la précédente et la suivante dans le sens de circulation des phases) et qui débouchent dans cette cellule 10 respectivement par deux orifices d'entrée/ sortie 14a et 15a respectivement proximal (i.e. radialement interne) et distal (i.e. radialement externe) par rapport à l'axe de rotation X'X de l'anneau 3a.

Ces orifices 14a et 15a définissent une traversée de chaque cellule 10 sensiblement dans la direction radiale de l'anneau 3a et ils sont surtout tels que deux cellules 10 adjacentes ont l'orifice proximal 14a de l'une qui est directement relié à l'orifice distal 15a de l'autre par le canal 14 ou 15. Il en résulte que toutes les cellules 10 de l'anneau 3a sont traversées par la phase mobile dans le seul et unique sens centrifuge des flèches G (i.e. radialement vers l'extérieur) ou bien dans le seul et unique sens opposé centripète (i.e. radialement vers l'intérieur), selon que cette phase mobile arrive par la droite ou par la gauche de la figure 2, respectivement.

Contrairement à cela, chaque cellule 110 de l'anneau 3 selon l'exemple de l'invention illustré à la figure 3 a ses deux canaux d'entrée/ sortie 114 et 115 qui y débouchent respectivement par ses deux orifices proximal 114a et distal 115a pour être traversée radialement de telle manière que deux cellules 110 adjacentes aient leurs orifices proximaux respectifs 114a ou bien leurs orifices distaux respectifs 115a reliés directement entre eux. On voit en effet à la figure 3 que deux cellules 110 adjacentes de cet anneau 3 sont directement reliées entre elles par un canal tangentiel 114, 115 qui est pour certaines paires de cellules adjacentes radialement interne 114 et pour d'autres paires radialement externe 115 (alors que les canaux 14 et 15 de la figure 2 comprennent des portions radiales pour relier l'orifice proximal 14a d'une cellule 10 à l'orifice distal 15a de l'autre).

Il résulte de cet agencement des canaux 114 et 115 vis-à-vis des cellules 110 de l'anneau 3 selon l'invention que les phases parcourant ces cellules 110 dans un même sens circonférentiel donné (de la droite vers la gauche dans l'exemple de la figure 3, voir les flèches E d'entrée et S de sortie) via les moyens de mise en circulation précités tels que des pompes, traversent certaines cellules D radialement vers l'extérieur (i.e. dans une direction centrifuge correspondant à un sens d'écoulement descendant par référence au champ gravitationnel, d'où la lettre « D » identifiant ces cellules) et d'autres cellules A radialement vers l'intérieur (i.e. dans une direction centripète correspondant à un sens d'écoulement ascendant par référence au champ gravitationnel, d'où la lettre « A » identifiant ces cellules). Ces inversions multiples de sens de traversée des cellules 110 se traduisent par autant d'inversions forcées des phases continue/ discontinue en circulation qui améliorent sensiblement le brassage entre phases, étant précisé que la phase lourde va percoler à l'état discontinu dans la phase légère continue dans toutes les cellules D à traversée descendante et qu'à l'inverse cette phase légère va très rapidement devenir discontinue dans chacune des cellules A suivantes à traversée ascendante pour y percoler la phase lourde devenue continue.

Dans l'exemple de la figure 3, on a choisi de faire se succéder en alternance les cellules A et D, via l'alternance correspondante des canaux tangentiels radialement interne 114 et radialement externe 115, ce qui présente l'avantage de forcer ces inversions multiples de phases à une fréquence élevée (i.e. avec une période au contraire très brève), ce qui permet d'optimiser encore davantage l'intensité du brassage et donc l'efficacité du transfert de matière recherché. Comme indiqué précédemment, on pourrait choisir en variante une quasi-alternance de ces cellules en intercalant une ou plusieurs cellules A ou D entre deux cellules A et D consécutives, suivant un motif de répétition par exemple de type AADAADAA ou encore ADDADDA, à titre non limitatif.

On voit en outre à la figure 3 que les cellules 110, qui sont chacune de type à deux compartiments 111 et 112, 111' et 112' radialement juxtaposés et reliés par un étroit pont radial 113 à l'instar de ce qui a été décrit à la figure 2, ont des largeurs tangentielles de compartiments différentes suivant qu'il s'agit de cellules D à traversée centrifuge ou de cellules A à traversée centripète. En effet, on prévoit avantageusement dans le cas d'un débit de phase lourde supérieur à celui de la phase légère (par exemple avec un rapport de débits de l'ordre de 7:3 entre phases lourde et légère), une largeur tangentielle qui est minimale pour ces cellules A et qui est maximale pour ces cellules D.

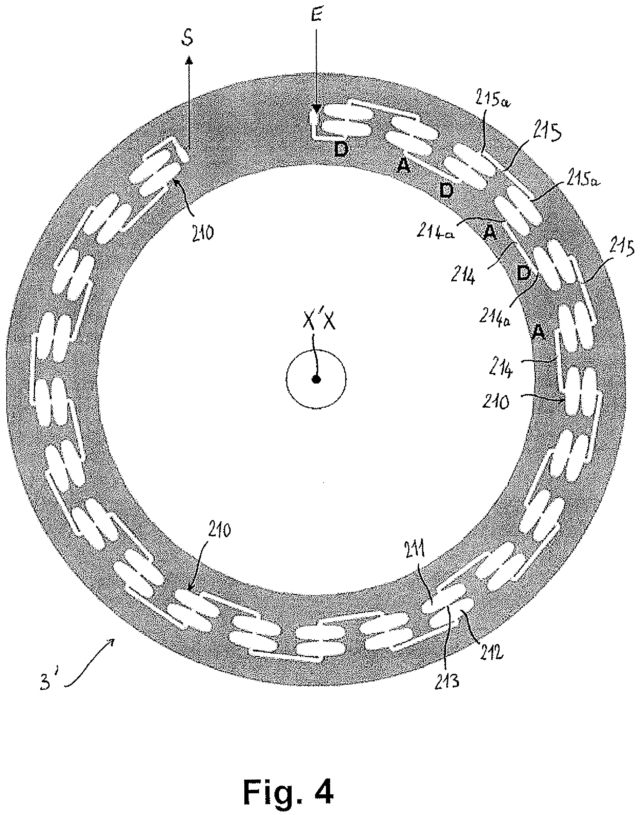

L'anneau 3' selon l'invention illustré dans sa totalité à la variante de la figure 4 se distingue uniquement de celui de la figure 3, en ce que ses cellules 210 à deux compartiments 211 et 212 reliés par un pont 213 sont toutes identiques et donc analogues à celles décrites ci-dessus pour la figure 2. Cet anneau 3' présente donc, à l'instar de l'anneau 3, une alternance de cellules A à traversée centripète ascendante et D centrifuge descendante, via l'alternance précitée des canaux tangentiels radialement internes 214 reliant entre eux les orifices de cellule proximaux 214a et de canaux tangentiels radialement externes 215 reliant entre eux les orifices de cellule distaux 215a, pour forcer lesdites inversions multiples de phases à une fréquence élevée. Comme cela est également le cas pour l'anneau 3 de la figure 3, on notera que la perte de charge dans le dispositif selon l'invention reste faible, du fait que le nombre de cellules par anneau 3, 3' y est relativement faible, et surtout du fait des inversions de sens de traversée des cellules 110, 210 qui entraînent une compensation de la pression hydrostatique dans le dispositif.

D'une manière générale, on notera que les cellules 110, 210 d'un anneau 3, 3' selon l'invention ainsi que les canaux 114, 214 et 115, 215 les reliant entre elles peuvent être soit gravés, soit percés à travers l'anneau 3, 3' (le nombre de cellules 110, 210 par anneau 3, 3' pouvant varier de quelques-unes à plusieurs centaines). L'épaisseur axiale des cellules 110, 210, ainsi que leur longueur radiale et leur largeur tangentielle peuvent varier dans une large mesure et sans réelle limite supérieure, pouvant en cas de besoin conduire à un dispositif de grand volume permettant de traiter de grandes quantités de fluides. A titre indicatif, le volume creux Vc de la colonne d'anneaux 3, 3' d'un dispositif selon l'invention peut varier de quelques dizaines de millilitres pour des applications analytiques notamment, à plusieurs centaines de litres pour des applications industrielles. Quant aux débits utilisés pour ces fluides, ils peuvent être choisis selon les applications recherchées et réglés de manière indépendante dans le dispositif.

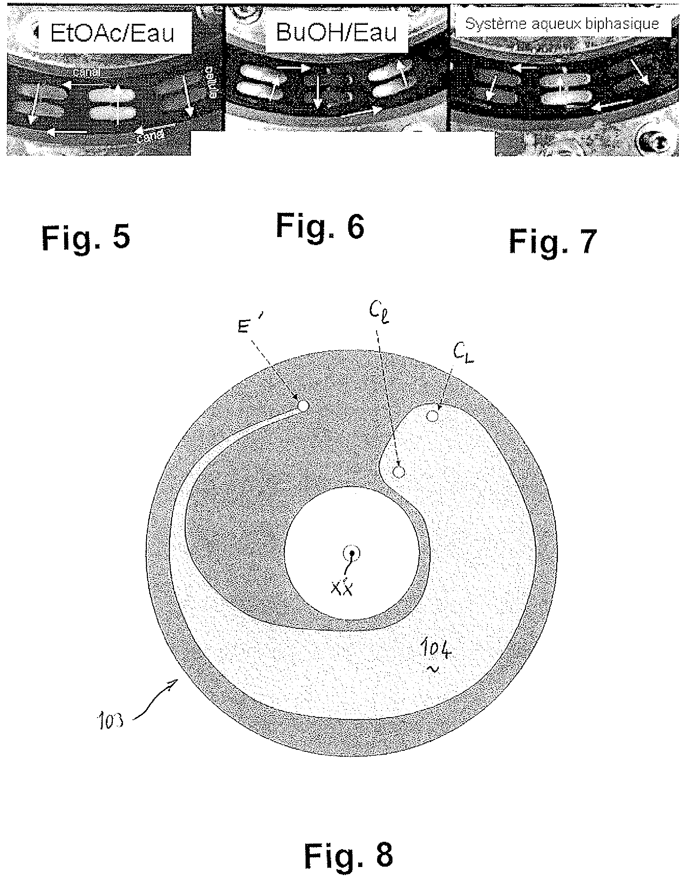

Les clichés des figures 5 à 7 illustrent les inversions de phases continue/ discontinue obtenues au moyen d'un anneau 3' selon la figure 4 d'épaisseur environ égale à 0,5 cm et comportant 23 cellules 110 se succédant de manière alternée via 12 cellules D à traversée centrifuge et 11 cellules A à traversée centripète. Cet anneau 3' testé autorise des débits d'au moins 300 mL/min. On a réalisé en laboratoire des essais de brassage entre deux phases liquides au moyen de cet anneau 3', avec un volume total occupé par les fluides de 30 mL environ.

La figure 5 montre les inversions de phases obtenues pour un système biphasique acétate d'éthyle / eau (EtOAc/Eau), la figure 6 pour un système biphasique butanol / eau (BuOH/Eau) et la figure 7 pour un système aqueux biphasique polyéthylène glycol 1000 (PEG1000) (12,5 % en rapport poids/poids) / monohydrogénophosphate de potassium dans de l'eau (K₂HPO₄ en rapport poids/poids de 12,5 %). Les débits utilisés variaient de 25 à 60 mL/min. pour chaque phase, le sens des écoulements étant celui indiqué par les flèches.

Dans ces figures 5 à 7, les cellules les plus claires, qui correspondent auxdites cellules A « ascendantes » traversées dans le sens centripète, témoignent d'une dispersion par jet brisé ou « spray » de la phase légère relativement foncée (bleue) dans la phase lourde continue qui est quasiment incolore. A l'inverse, les cellules les plus foncées qui correspondent auxdites cellules D « descendantes » traversées dans le sens centrifuge, sont celles où cette phase lourde quasiment incolore circule sous forme dispersée dans la phase légère bleue qui est alors la phase continue. L'inversion de phases a eu lieu à chaque passage d'une cellule A ou D à la suivante D ou A, et le rapport des volumes relatifs des phases dans ces cellules s'est inversé lors de chaque passage (par exemple 20/80 puis 80/20).

Concernant spécifiquement le troisième essai relatif au système aqueux biphasique PEG1000 / K₂HPO₄, on a fait en outre varier dans une plus large mesure les débits totaux des deux phases circulant dans l'anneau 3', de 0 à 300 mL/min. Il est à noter qu'un tel système aqueux biphasique décante difficilement et que dans cet anneau 3' selon l'invention cela n'a pas empêché l'inversion de phases d'avoir lieu à chaque traversée des cellules alternées A et D (avec un débit global de 300 mL/min, cette inversion de phases a eu lieu toutes les 0,25 seconde, soit à une fréquence d'inversion de 4 Hz).

La figure 8 montre un exemple de décanteur de phases qui est intégré au dispositif selon l'invention avant sa sortie et qui est constitué par la dernière unité tournante 103 de l'empilement de la figure 1 montée également mobile en rotation autour de l'axe X'X, et formée d'un disque sur lequel est gravé un canal de décantation 104 sensiblement circulaire et de largeur croissante dans cet exemple de réalisation entre son entrée E' pour les phases à décanter et à l'opposé ses deux sorties de collecte adjacentes C_{I} pour la phase légère et C_{L} pour la phase lourde. On peut collecter ces phases séparément soit via un joint de rotation à deux voies, soit simplement par deux sorties, l'une axiale et l'autre radiale.

## Revendications

1. Dispositif de mise en contact de phases fluides immiscibles au moyen de la force centrifuge, en particulier pour réaliser l'extraction de composés de l'une de ces phases par une autre phase, le dispositif comportant au moins une unité de mise en contact (3, 3') qui est apte à être entraînée en rotation autour d'un axe (X'X) et qui comprend une pluralité de cellules (110, 210, A, D) situées dans un plan perpendiculaire audit axe et destinées à être parcourues successivement par ces phases dans un même sens de circulation donné, chaque cellule étant pourvue de deux canaux d'entrée/ sortie (114 et 115, 214 et 215) qui relient de manière fluidique les cellules deux à deux entre elles et qui débouchent dans chaque cellule respectivement par deux orifices d'entrée/ sortie respectivement proximal (114a, 214a) et distal (115a et 215a) par rapport audit axe, **caractérisé en ce que** pour au moins deux cellules adjacentes (A et D) de ladite au moins une unité, leurs deux orifices proximaux (114a, 214a) ou bien leurs deux orifices distaux (115a, 215a) sont reliés directement entre eux par l'un de ces canaux (114, 214 ou 115, 215), de telle sorte que ces phases circulent à travers l'une de ces cellules adjacentes vers ledit axe et à travers l'autre cellule en s'éloignant dudit axe.

2. Dispositif selon la revendication 1, **caractérisé en ce que** lesdits canaux (114 et 115, 214 et 215) se subdivisent en au moins un canal proximal (114, 214) formé entre ledit axe (X'X) et lesdites deux cellules adjacentes (A et D) qu'il relie l'une à l'autre par leurs orifices proximaux respectifs (114a, 214a) et/ou en au moins un canal distal (115, 215) formé au-delà desdites deux cellules adjacentes par rapport audit axe qu'il relie l'une à l'autre par leurs orifices distaux respectifs (115a, 215a).

3. Dispositif selon la revendication 1 ou 2, **caractérisé en ce que** ladite au moins une unité (3, 3') comporte un anneau qui est apte à être entraîné en rotation autour de son axe de symétrie formant ledit axe (X'X) et sur la circonférence duquel est formée ladite pluralité de cellules (110, 210, A, D).

4. Dispositif selon la revendication 3, **caractérisé en ce que** ladite pluralité de cellules (110, 210, A, D) présente à de multiples reprises sur la circonférence dudit anneau (3, 3'), d'une part, lesdites deux cellules adjacentes (A et D) à orifices proximaux (114a, 214a) radialement internes reliés entre eux et, d'autre part, lesdites deux cellules adjacentes à orifices distaux (115a, 215a) radialement externes reliés entre eux, de telle sorte que ces phases circulent à travers les cellules radialement vers l'intérieur et vers l'extérieur d'une manière séquentielle prédéterminée, de préférence alternée sur cette circonférence.

5. Dispositif selon les revendications 2 et 4, **caractérisé en ce que** ledit anneau (3, 3') comprend plusieurs desdits canaux proximaux (114, 214) et distaux (115, 215) qui sont respectivement radialement internes et externes par rapport auxdites cellules (110, 210, A, D) qu'ils relient entre elles et qui s'étendent tous deux sensiblement perpendiculairement à la direction radiale de cet anneau passant par ledit axe (X'X).

6. Dispositif selon une des revendications 3 à 5, **caractérisé en ce que** chacune desdites cellules (110, 210, A, D) a lesdits deux orifices d'entrée/ sortie qui sont respectivement radialement interne (114a, 214a) et radialement externe (115a, 215a) vis-à-vis de cette cellule et qui sont sensiblement situés sur une droite radiale dudit anneau (3, 3') passant par ledit axe (X'X) et par exemple par le barycentre de cette cellule vue en section radiale.

7. Dispositif selon une des revendications 3 à 6, **caractérisé en ce que** chacune desdites cellules (110, 210, A, D) est formée de plusieurs compartiments (111 et 112, 111' et 112', 211 et 212) qui sont juxtaposés dans la direction radiale en étant reliés deux à deux entre eux par un pont fluidique radial (113, 213), et de préférence **en ce que** lesdits compartiments (111 et 112, 111' et 112', 211 et 212) d'une même cellule (110, 210, A, D), identiques ou différents, présentent une forme oblongue dans la direction circonférentielle, ledit ou chaque pont radial (113, 213) étant sensiblement aligné avec lesdits deux orifices d'entrée/ sortie (114a et 115a, 214a et 215a) de chaque cellule.

8. Dispositif selon une des revendications 3 à 7, **caractérisé en ce qu'**il comporte une multitude desdits anneaux (3, 3') de forme plate qui sont empilés autour dudit axe (X'X) et qui sont destinés à former autant d'étages de transfert de matière, via un champ gravitationnel (G) auquel lesdites cellules (110, 210, A, D) sont soumises et qui fait correspondre des mouvements descendant et ascendant des phases respectivement à leur circulation radialement vers l'extérieur et vers l'intérieur à travers les cellules, et de préférence **en ce que** le dispositif est pourvu de moyens de collecte (103) desdites phases qui sont formés :
- en sortie du dispositif sous la forme d'un décanteur séparé, ou bien
- par un disque tournant (103) autour dudit axe (X'X) qui est intégré au dispositif en sortie de ladite ou desdites unité(s) (3, 3'), via un canal de décantation (104) formé dans ce disque de manière sensiblement circulaire selon une largeur constante ou variable ou bien en spirale.

9. Procédé de mise en contact de phases fluides immiscibles au moyen de la force centrifuge, en particulier pour réaliser l'extraction de composés de l'une de ces phases par une autre phase, ce procédé comprenant un entraînement en rotation autour d'un axe (X'X) d'une pluralité de cellules (110, 210, A, D) de mise en contact qui sont situées dans un plan perpendiculaire audit axe et qui sont parcourues successivement par ces phases pour l'obtention dans chaque cellule d'une phase continue dans laquelle est dispersée une autre phase discontinue, **caractérisé en ce qu'**il comprend une circulation dans un même sens donné des phases d'une cellule à l'autre de manière que ces phases se rapprochent puis s'éloignent dudit axe lorsqu'elles traversent ces cellules, pour l'obtention d'une inversion de la phase continue et de la phase discontinue à chaque changement de leur direction de traversée de la ou chaque cellule concernée.

10. Procédé de mise en contact de phases selon la revendication 9, **caractérisé en ce que** l'on disperse l'une des phases, ou phase lourde, dans l'autre phase, ou phase légère, à la ou chaque inversion de phases se traduisant par leur traversée d'une cellule (110, 210, D) dans le sens d'un éloignement dudit axe (X'X) et, à l'inverse, **en ce que** l'on disperse la phase légère dans la phase lourde à la ou chaque inversion de phases se traduisant par leur traversée d'une cellule (110, 210, A) dans le sens d'un rapprochement dudit axe.

11. Procédé de mise en contact de phases selon la revendication 9 ou 10, **caractérisé en ce que** l'on réalise de manière séquentielle prédéterminée et de préférence alternée, de multiples inversions de ces phases continue et discontinue à chaque changement de leur direction de traversée des cellules (110, 210, A, D).

12. Procédé de mise en contact de phases selon la revendication 11, **caractérisé en ce que** l'on forme lesdites cellules (110, 210, A, D) dans au moins une unité de mise en contact (3, 3') que l'on entraîne en rotation autour de son axe de symétrie formant ledit axe (X'X) et sur la circonférence de laquelle est formée ladite pluralité de cellules, lesquelles génèrent ces inversions multiples de phases continue et discontinue par l'agencement de canaux d'entrée/ sortie (114 et 115, 214 et 215) reliant ces cellules deux à deux entre elles.

13. Procédé de mise en contact de phases selon les revendications 10 et 12, **caractérisé en ce que** lesdites cellules (110) présentent au moins deux largeurs différentes dans la direction circonférentielle, incluant des largeurs de cellule minimale (A) et maximale (D) pour les cellules traversées par ces phases radialement vers l'intérieur (A) et vers l'extérieur (D), respectivement, pour un débit de la phase lourde supérieur à celui de la phase légère.

14. Procédé de mise en contact de phases selon une des revendications 9 à 13, **caractérisé en ce que** l'on met en contact ces phases via un champ gravitationnel (G) auquel lesdites cellules (110, 210, A, D) sont soumises et qui fait correspondre des mouvements descendant et ascendant des phases respectivement à leur traversée des cellules radialement vers l'extérieur (D) et vers l'intérieur (A).

15. Procédé de mise en contact de phases selon une des revendications 9 à 14, **caractérisé en ce que** l'on réalise par cette mise en contact une opération choisie dans le groupe constitué par les extractions liquide-liquide, les extractions gaz-liquide, les extractions triphasiques solide-liquide-liquide, les chromatographies, les réactions chimiques en milieu biphasique et la production de nano-émulsions, et **en ce que** l'on réalise optionnellement en outre une opération de décantation pour séparer l'une de l'autre les phases mises en contact dans lesdites cellules (110, 210, A, D).

## Patentansprüche

1. Vorrichtung zum Inkontaktversetzen von unmischbaren fluiden Phasen mittels Zentrifugalkraft, insbesondere zur Durchführung der Extraktion von Verbindungen einer dieser Phasen durch eine andere Phase, wobei die Vorrichtung mindestens eine Kontaktversetz.ungseinheit (3, 3') aufweist, die imstande ist, um eine Achse (X'X) rotierend angetrieben zu sein und die eine Vielzahl von Zellen (110, 210, A, D) umfasst, die sich in einer senkrechten Ebene zu der Achse befinden und bestimmt sind, von diesen Phasen in einer bestimmten gleichen Zirkulationsrichtung aufeinanderfolgend durchquert zu werden, wobei jede Zelle mit zwei Eingangs-/Ausgangskanälen (114 und 115, 214 und 215) ausgestattet ist, welche die Zellen paarig miteinander fluidisch verbinden und die in jede Zelle jeweils durch zwei Eingangs-/Ausgangsöffnungen jeweils proximal (114a, 214a) und distal (115a und 215a) in Bezug zu der Achse münden, **dadurch gekennzeichnet, dass** für mindestens zwei benachbarte Zellen (A und D) der mindestens einen Einheit ihre zwei proximalen Öffnungen (114a, 214a) oder auch ihre zwei distalen Öffnungen (115a, 215a) durch einen dieser Kanäle (114, 214 oder 115, 215) derart direkt miteinander verbunden sind, dass diese Phasen durch eine dieser benachbarten Zellen zur Achse und durch die andere Zelle, indem sie sich von der Achse entfernen, zirkulieren.

2. Vorrichtung nach Anspruch 1, **dadurch gekennzeichnet, dass** sich die Kanäle (114 und 115, 214 und 215) in mindestens einen proximalen Kanal (114, 214), der zwischen der Achse (X'X) und den zwei benachbarten Zellen (A und D) ausgebildet ist, die er durch ihre jeweiligen proximalen Öffnungen (114a, 214a) miteinander verbindet, und/oder in mindestens einen distalen Kanal (115, 215), der jenseits der zwei benachbarten Zellen in Bezug zur Achse ausgebildet ist, die er durch ihre jeweiligen distalen Öffnungen (115a, 215a) miteinander verbindet, unterteilen.

3. Vorrichtung nach Anspruch 1 oder 2, **dadurch gekennzeichnet, dass** die mindestens eine Einheit (3, 3') einen Ring aufweist, der imstande ist, um seine Symmetrieachse, welche die Achse (X'X) bildet, rotierend angetrieben zu sein, und auf dessen Umfang die Vielzahl von Zellen (110, 210, A, D) ausgebildet ist.

4. Vorrichtung nach Anspruch 3, **dadurch gekennzeichnet, dass** die Vielzahl von Zellen (110, 210, A, D) vielfach wiederholend auf dem Umfang des Rings (3, 3') zum einen die zwei benachbarten Zellen (A und D) mit radial internen proximalen Öffnungen (114a, 214a), die miteinander verbunden sind, und zum anderen die zwei benachbarten Zellen mit radial externen distalen Öffnungen (115a, 215a), die miteinander verbunden sind, derart aufweist, dass diese Phasen durch die Zellen sequentiell vorbestimmt, vorzugsweise auf diesem Umfang alternierend, radial nach innen und nach außen zirkulieren.

5. Vorrichtung nach den Ansprüchen 2 und 4, **dadurch gekennzeichnet, dass** der Ring (3, 3') mehrere der proximalen (114, 214) und distalen (115, 215) Kanäle umfasst, die jeweils radial intern und extern in Bezug auf die Zellen (110, 210, A, D), die sie miteinander verbinden, angeordnet sind, und die sich alle beide etwa senkrecht zur radialen Richtung dieses Rings, durch die Achse (X'X) verlaufend, verstrecken.

6. Vorrichtung nach einem der Ansprüche 3 bis 5, dadurch gekenntzeichnet, dass jede der Zellen (110, 210, A, D) die zwei Eingangs-/Ausgangsöffnungen hat, die jeweils radial intern (114a, 214a) und radial extern (115a, 215a) gegenüber dieser Zelle sind und die sich etwa auf einer radialen Geraden des Rings (3, 3'), durch die Achse (X'X) und beispielsweise durch den Massenmittelpunkt dieser Zelle, gesehen im Radialschnitt, verlaufend, befinden.

7. Vorrichtung nach einem der Ansprüche 3 bis 6, dadurch gekenntzeichnet, dass jede der Zellen (110, 210, A, D) von mehreren Abteile (111 und 112, 111' und 112', 211 und 212) gebildet ist, die in der radialen Richtung aneinandergereiht sind, indem sie mittels einer radialen Fluidbrücke (113, 213) paarig miteinander verbunden sind, und vorzugsweise dadurch, dass die identischen oder unterschiedlichen Abteile (111 und 112, 111' und 112', 211 und 212) einer selben Zelle (110, 210, A, D) eine längliche Form in der Umtangsrichtung aufweisen, wobei die oder jede radiale Brücke (113, 213) etwa mit den zwei Eingangs-/Ausgangsöffnungen (114a und 115a, 214a und 215a) jeder Zelle fluchtet.

8. Vorrichtung nach einem der Ansprüche 3 bis 7, dadurch gekenntzeichnet, dass sie eine Vielzahl der flach geformten Ringe (3, 3') aufweist, die um die Achse (X'X) gestapelt sind und bestimmt sind, über ein Gravitationsfeld (G), dem die Zellen (110, 210, A, D) unterliegen, ebenso viele Materialtransferstufen zu bilden, und das aufsteigende und abfallende Bewegungen der Phasen jeweils an ihre Zirkulation radial nach außen und nach innen durch die Zellen anpasst, und vorzugsweise dadurch, dass die Vorrichtung mit Sammelmittel (103) der Phasen ausgestattet ist, die gebildet sind:
- am Ausgang der Vorrichtung in Form eines separaten Abscheiders, oder auch
- von einer um die Achse (X'X) drehenden Scheibe (103), die in die Vorrichtung am Ausgang der Einheit(en) (3, 3') integriert ist, über einen Abscheidekanal (104), der in dieser Scheibe etwa kreisförmig gemäß einer konstanten oder variablen Breite oder auch als Spirale ausgebildet ist.

9. Verfahren des Inköntaktversetzens von unmischbaren fluiden Phasen mittels Zentrifugalkraft, insbesondere zur Durchführung der Extraktion von Verbindungen einer dieser Phasen durch eine andere Phase, wobei dieses Verfahren einen rotierenden Antrieb um eine Achse (X'X) einer Vielzahl von Inkontaktversetzungszellen (110, 210, A, D) umfasst, die sich in einer senkrechten Ebene zur Achse befinden und die aufeinanderfolgend von diesen Phasen für den Erhalt in jeder Zelle einer kontinuierlichen Phase, in welcher eine andere diskontinuierliche Phase dispergiert wird, durchquert werden, **dadurch gekennzeichnet, dass** es eine Zirkulation in eine gleiche bestimmte Richtung der Phasen von einer Zelle zur anderen derart umfasst, dass sich diese Phasen, wenn sie diese Zellen durchqueren, für den Erhalt einer Umkehr der kontinuierlichen Phase und der diskontinuierlichen Phase bei jeder Änderung ihrer Durchquerungsrichtung der oder jeder betroffenen Zelle an die Achse annähern und dann von ihr entfernen.

10. Verfahren des Inkontaktversetzens von Phasen nach Anspruch 9, **dadurch gekennzeichnet, dass** eine der Phasen oder schwere Phase in die andere Phase oder leichte Phase bei der oder jeder Phasenumkehr, die sich durch ihre Durchquerung einer Zelle (110, 210, D) in Richtung einer Entfernung von der Achse (X'X) ausdrückt, dispergiert wird, und, umgekehrt, dass die leichte Phase in die schwere Phase bei der oder jeder Phasenumkehr, die sich durch ihre Durchquerung einer Zelle (110, 210, A) in Richtung einer Annäherung an die Achse ausdrückt, dispergiert wird.

11. Verfahren des Inkontaktversetzens von Phasen nach Anspruch 9 oder 10, **dadurch gekennzeichnet, dass** zahlreiche Umkehren dieser kontinuierlichen und diskontinuierlichen Phase bei jeder Änderung ihrer Durcrlquerungsrichtung der Zellen (110, 210, A, D) vorbestimmt sequentiell und vorzugsweise alternierend durchgeführt werden.

12. Verfahren des Inkontaktversetzens von Phasen nach Anspruch 11, dadurch gekennzeichet, dass die Zellen (110, 210, A, D) in mindestens einer Kontaktversetzungseinheit (3, 3') gebildet werden, die um ihre Symmetrieachse, welche die Achse (X'X) bildet, und auf deren Umfang die Vielzahl von Zellen ausgebildet ist, welche diese zahlreichen Umkehren der kontinuierlichen und diskontinuierlichen Phase durch die Anordnung von diese Zellen paarig miteinander verbindenden Eingangs-/Ausgangskanälen (114 und 115, 214 und 215) erzeugen, rotierend angetrieben wird.

13. Verfahren des Inkontaktversetzens von Phasen nach den Ansprüchen 10 und 12, **dadurch gekennzeichnet, dass** die Zellen (110) mindestens zwei unterschiedliche Breiten in der Umfangsrichtung, minimale (A) und maximale (D) Zellbreiten für die Zellen, die von diesen Phasen jeweils radial nach innen (A) und nach außen (D) durchquert werden, einschließend, für einen größeren Durchsatz der schweren Phase als der leichten Phase aufweise.

14. Verfahren des Inkontaktversetzens von Phasen nach einem der Ansprüche 9 bis 13, **dadurch gekennzeichnet, dass** diese Phasen über ein Gravitationsfeld (G), dem die Zellen (110, 210, A, D) unterliegen und das aufsteigende und abfallende Bewegungen der Phasen jeweils an ihren Zelldurchgang radial nach außen (D) und nach innen (A) anpasst, in Kontakt versetzt werden.

15. Verfahren des Inkontaktversetzens von Phasen nach einem der Ansprüche 9 bis 14, **dadurch gekennzeichnet, dass** durch dieses Inkontaktversetzen ein Vorgang durchgeführt wird, der aus der Gruppe ausgewählt ist, die aus den Flüssigkeit-Flüssigkeit-Extraktionen, den Gas-Flüssigkeit-Extraktionen, den dreiphasigen Feststoff-Flüssigkeit-Flüssigkeit-Extraktionen, den Chromatographien, den chemischen Reaktionen in Zweiphasenmedium und der Produktion von Nanoemulsionen gebildet ist, und dass optional ferner ein Abscheidevorgang durchgeführt wird, um die eine von der anderen der Phasen, die in den Zellen (110, 210, A, D) in Kontakt versetzt wurden, zu trennen.

## Claims

1. A device for bringing immiscible fluid phases into contact by means of centrifugal force, in particular for extracting compounds from one of these phases using another phase, the device comprising at least one contacting unit (3, 3') which is capable of being rotated about an axis (X'X) and which comprises a plurality of cells (110, 210, A, D) located in a plan perpendicular to said axis and configured to be passed through successively by these phases in one and the same given flow direction, each cell being provided with two inlet/outlet channels (114 and 115, 214 and 215) which fluidly connect the cells together in pairs and which open into each cell respectively via two inlet/outlet orifices which are respectively proximal (114a, 214a) and distal (115a and 215a) with respect to said axis, **characterized in that**, for at least two adjacent cells (A and D) of said at least one unit, their two proximal orifices (114a, 214a) or else their two distal orifices (115a, 215a) are directly connected together by one of these channels (114, 214 or 115, 215), so that these phases flow through one of these adjacent cells toward said axis and through the other cell away from said axis.

2. The device as claimed in claim 1, **characterized in that** said channels (114 and 115, 214 and 215) subdivide into at least one proximal channel (114, 214) formed between said axis (X'X) and said two adjacent cells (A and D) which it connects to one another via their respective proximal orifices (114a, 214a) and/or into at least one distal channel (115, 215) formed beyond said two adjacent cells with respect to said axis which it connects to one another via their respective distal orifices (115a, 215a).

3. The device as claimed in claim 1 or 2, **characterized in that** said at least one unit (3, 3') comprises a ring which is capable of being rotated about its axis of symmetry forming said axis (X'X) and on the circumference of which said plurality of cells (110, 210, A, D) is formed.

4. The device as claimed in claim 3, **characterized in that** said plurality of cells (110, 210, A, D) has, repeated multiple times over the circumference of said ring (3, 3'), on the one hand, said two adjacent cells (A and D) having radially inner proximal orifices (114a, 214a) that are connected together and, on the other hand, said two adjacent cells having radially outer distal orifices (115a, 215a) that are connected together, so that these phases flow through the cells radially toward the inside and toward the outside in a predetermined in a predetermined sequential manner, preferably alternate sequential manner over this circumference.

5. The device as claimed in claims 2 and 4, **characterized in that** said ring (3, 3') comprises several of said proximal channels (114, 214) and distal channels (115, 215) that are respectively radially inner and outer with respect to said cells (110, 210, A, D) that they connect together and that both extend substantially perpendicular to the radial direction of this ring passing through said axis (X'X).

6. The device as claimed in one of claims 3 to 5, **characterized in that** each of said cells (110, 210, A, D) has said two inlet/outlet orifices which are respectively radially inner (114a, 214a) and radially outer (115a, 215a) with respect to this cell and which are substantially situated on a radial line of said ring (3, 3') passing through said axis (X'X) and for example through the barycenter of this cell seen in radial cross section.

7. The device as claimed in one of claims 3 to 6, **characterized in that** each of said cells (110, 210, A, D) is formed of several compartments (111 and 112, 111' and 112', 211 and 212) which are juxtaposed in the radial direction by being connected together in pairs via a radial fluid bridge (113, 213) and **in that** preferably saif compartments (111 and 112, 111' and 112', 211 and 212) of a same cell (110, 210, A, D), identical or different,has an elongated shape in the circumferential direction, said or each radial bridge (113, 213) being substantially aligned with said two inlet/outlet orifices (114a and 115a, 214a and 215a) of each cell.

8. The device as claimed in one of claims 3 to 7, **characterized in that** it comprises a multitude of said rings (3, 3') of flat shape which are stacked about said axis (X'X) and which are configured to form as many stages of mass transfer, via a gravitational field (G) to which said cells (110, 210, A, D) are subjected and which matches descending and ascending movements of the phases respectively to their radially outward and inward flow through the cells and preferably **in that** it is provided with means (103) for collecting said phases that are formed:
- at the outlet of the device in the form of a separate decanter, or else,
- by a disc (103) rotating about said axis (X'X) that is integrated into the device at the outlet of said unit(s) (3, 3'), via a decantation channel (104) formed in this disc in a substantially circular manner along a constant or variable width or else in a spiral.

9. A process for bringing immiscible fluid phases into contact by means of centrifugal force, in particular for extracting compounds from one of these phases using another phase, this process comprising a rotation about an axis (X'X) of a plurality of contacting cells (110, 210, A, D) which are located in a plan perpendiciular to said axis and which are passed through successively by these phases in order to obtain in each cell a continuous phase in which another discontinuous phase is dispersed, **characterized in that** it comprises a flow in one and the same given direction of the phases from one cell to another cell so that these phases come closer to then move away from said axis when they pass through these cells, in order to obtain an inversion of the continuous phase and of the discontinuous phase at each change of their direction for passing through the or each corresponding cell.

10. The phase-contacting process as claimed in claim 9, **characterized in that** one of the phases, or heavy phase, is dispersed in the other phase, or light phase, at the or each phase inversion resulting from them passing through a cell (110, 210, D) in the direction of moving away from said axis (X'X) and, conversely, **in that** the light phase is dispersed in the heavy phase at the or each phase inversion resulting from them passing through a cell (110, 210, A) in the direction of moving closer to said axis.

11. The phase-contacting process as claimed in claim 9 or 10, **characterized in that** multiple inversions of these continuous and discontinuous phases are performed in a predetermined and preferably alternate sequential manner at each change of their direction for passing through the cells (110, 210, A, D).

12. The phase-contacting process as claimed in claim 11, **characterized in that** said cells (110, 210, A, D) are formed in at least one contacting unit (3, 3') that is rotated about its axis of symmetry forming said axis (X'X) and over the circumference of which said plurality of cells is formed, which cells generate these multiple inversions of continuous and discontinuous phases via the arrangement of inlet/outlet channels (114 and 115, 214 and 215) connecting these cells together in pairs.

13. The phase-contacting process as claimed in claims 10 and 12, **characterized in that** said cells (110) have at least two different widths in the circumferential direction, including a minimum cell width (A) and a maximum cell width (D) for the cells passed through by these phases radially inward (A) and outward (D) , respectively, for a flow rate of the heavy phase greater than that of the light phase.

14. The phase-contacting process as claimed in one of claims 9 to 13, **characterized in that** these phases are brought into contact via a gravitational field (G) to which said cells (110, 210, A, D) are subjected and which matches descending and ascending movements of the phases respectively to them passing through the cells radially outward (D) and inward (A).

15. The phase-contacting process as claimed in one of claims 9 to 14, **characterized in that** an operation is performed via this contacting step, which operation is chosen from the group consisting of liquid-liquid extractions, gas-liquid extractions, solid-liquid-liquid three-phase extractions, chromatographies, chemical reactions in a two-phase medium and the production of nanoemulsions, and **in that** optionally, in addition, a decantation operation is carried out in order to separate the phases brought into contact in said cells (110, 210, A, D) from one another.
